# EUROPEAN PATENT SPECIFICATION

(11) **EP 1 801 245 B1**
(45) Date of publication and mention of the grant of the patent: **22.05.2013**
(21) Application number: 05077957.8
(22) Date of filing: 21.12.2005
(51) Int. Cl.: C21D 9/40, F16G 5/16, B21D 53/16, F27D 5/00

(54) **Carrier rack for the heat treatment of a metal ring component of a push belt**
Werkstückträger für die Wärmebehandlung eines ringförmigen metallischen Bauteils eines Schubriemens
Support pour le traitement thermique d'un composant annulaire d'une courroie de poussée

(43) Date of publication of application: 27.06.2007
(73) Proprietor: ROBERT BOSCH GMBH, 70442 Stuttgart (DE)
(72) Inventor: Nelis, Wilhelmus Adrianus Antonius, 3036 CH Tilbug (NL); Van Melle, Ferdinand Karel François, 5037 DL Tilburg (NL); Van Stiphout, Nicolaas Henricus Josephus Maria, 5741 DK Beek en Donk (NL)
(74) Representative: Plevier, Gabriel Anton Johan Maria

(56) References cited:
- EP-A- 1 273 824
- DE-A1- 10 232 262
- PATENT ABSTRACTS OF JAPAN vol. 2000, no. 22, 9 March 2001 (2001-03-09) & JP 2001 139123 A (HONDA MOTOR CO LTD), 22 May 2001 (2001-05-22)
- PATENT ABSTRACTS OF JAPAN vol. 2003, no. 12, 5 December 2003 (2003-12-05) & JP 2005 042159 A (HONDA MOTOR CO LTD), 17 February 2005 (2005-02-17)

## Description

The present invention concerns the manufacturing process of pushbelts and in particular provides for a carrier rack used for holding and conveying a metal ring component of the pushbelt in a heat treatment process step as defined by the preamble of the following claim 1. The push belt itself is mainly used as the means for power transmission between two adjustable pulleys of the well-known continuously variable transmission applied in motor vehicles.

Such pushbelts, which are composed of transverse metal elements that are slidably incorporated along one or more laminated set of radially nested metal rings, are generally known. The rings thereof are normally produced from maraging steel, which kind of steel combines a/o the characteristic of great tensile strength and good resistance against bending and/or tensile stress fatigue with a relatively favourable possibility to process the material towards the desired shape and characteristics. These shape and characteristics should in principle not vary along the circumference of the rings in the end product.

The manufacturing method for producing such belts, at least for such rings thereof, as applied by Applicant during several decades by now, is disclosed in general terms by the European patent application EP-A-1 055 738. As a part of the known preparatory process the rings are heat-treated in several times, e.g. for annealing, ageing and nitriding the rings.

A problem generally encountered in the art is how to favourably carry the rings to, from and during the respective process steps of heat treatment. On the one hand, the rings need to be securely mounted on a carrier rack and, on the other hand, they must preferably retain their optimum, circular shape whilst being heat-treated. Also, in ring nitriding, it is a requirement that the ring surface lies open to the surrounding atmosphere, i.e. is not, or at least hardly, shielded therefrom by being in direct contact with the carrier. Accordingly, generally speaking, the ring carrier rack must be designed such that as small a clamping or holding force as possible is exerted on the rings and such that an area of contact between the device and the rings is also as small as possible. Moreover, the design of the carrier rack must preferably be such that the rings may be favourably, i.e. easily and quickly, mounted and de-mounted.

In the known art several basic carrier rack designs have been proposed. However, these known carrier racks do not appear to simultaneously satisfy all of the above requirements, at least it appears that room for improvement is left in this respect. For example in EP-A-1 273 824 it is proposed to force the ring into an elliptical shape by means of three or more rods that are distributed along the circumference of the ring, whereby the ring is apparently locked into place merely by means of friction. Moreover, a considerably surface area of the ring will be shielded from the surrounding atmosphere by being in contact with the rods. Also in the carrier rack known form JP-A-2001-139123 the rings will assume an elliptical shape when mounted, both under the influence of gravity and by the two locking means of the device pushing in diametrically opposed directions against they radially inner surface of the rings.

Although, the rings may be easily mounted in and securely held by these known basic arrangements, they also have the disadvantage that certain characteristics of the end product will inevitably vary along the circumference of the ring due to elliptical posture during heat treatment.

An alternative solution is proposed in JP-A-2001-329317, wherein a carrier rack or jig is shown wherein the ring is freely and horizontally placed on a perforated flange part of a ring holding member. Although, by this design the rings retain their circular posture, it would also seem that a considerable part of the ring surface, i.e. of the ring's side face, is in direct contact with the carrier rack. Further this known arrangement appears to require a delicate and considerable ring handling effort, since the rings have to be accurately placed around a hub part of the ring holder, since only a few rings can be accommodated by a single ring holder and since the ring holders have to be mutually stacked as separate components of the carrier rack.

It is an aim of the present invention to further improve on these known carrier racks, more in particular it is sought for a design that provides a favourable optimum between the above-mentioned process requirements. Hereto, the carrier rack according to the invention is provided with the features of the characterising portion of claim 1.

The carrier rack according to the invention comprises an even number of rods that are arranged in pairs of diametrically opposed rods, whereby all rods of the rack extend in parallel in vertical direction and are interconnected by means of a spacer. Each rod comprises a number of horizontally projecting ring seats that define a tapered, i.e. at least effectively V-shaped, recess that wideness in (radially) outward direction. For at least one pair of rods a distance between the respective rods is less than a diameter of the ring component when positioned in a circular posture, whereas the rods of the remaining pairs of rods are placed just outside or lightly touching the circumference of the ring component when being held between the said one pair of rods. In this manner a small but noticeable clamping force is exerted on the rings mounted in the carrier rack, such that they are reliably held therein, even when the rack is subjected to a mechanical impact. Hereby, a distance between the said one pair of rods of about 80-95 % of the free-state ring diameter has been found to provide good results with an optimum at around 90%, so as to minimally influence the essentially circular shape thereof, which is preferred in the heat treatment. Preferably, these remaining pairs of rods are distributed symmetrically around the said circumference. Preferably, the ring seats are shaped as solids of revolution relative to the long axis of the respective rod. Preferably also, the ring seats are positioned at corresponding intervals along the height of the rods.

The rings are inserted in the carrier rack, i.e. placed in between the rods thereof into the space encompassed thereby, while being held in an elongated shape, i.e. squeezed from their natural essentially circular shape into an oval shape. Thereafter, the rings are allowed to spring back into a more circular shape, whereby they settle on a ring seat of each of the rods. The carrier rack according to the invention has the advantages that the rings are held therein horizontally, that they are reliably held while mounted on the ring seats even when subjected to a mechanical shock, that they are held in a nearly circular shape and that they are in contact with the carrier rack only minimally.

In a preferred embodiment of the carrier rack it is provided with exactly six rods that are arranged in diametrically opposed pairs, whereof four rods are placed on the corners of a virtual rectangle having a long side and a short side and two rods being placed diametrically opposed from one another outside the rectangle essentially halfway the long side thereof. Hereby, the said two rods are placed at a distance of about 0.9 times the free-state ring diameter, whereas the said four rods are preferably placed such that the ratio between the long side and the short side of the rectangle amounts to about 1.5 and that the diagonals of the rectangle are essentially equal to or slightly larger (up several %) than the free-state ring diameter.

The invention will now be illustrated further with reference to the accompanying figures.
Figure 1 is a schematic illustration of the pushbelt the present invention relates to and of the transmission in which such belt is applied;
Figure 2 provides a cross-sectional view of the pushbelt;
Figure 3 provides a side and a top view of an example of a carrier rack for carrying the pushbelt ring component in a heat treatment process step;
Figure 4 depicts a ring seat of the carrier rack of figure 3 both in side elevation and in cross-section;
Figure 5 is a schematic representation of a top view of the carrier rack of figure 3 indicating the mutual placement of the rods thereof.

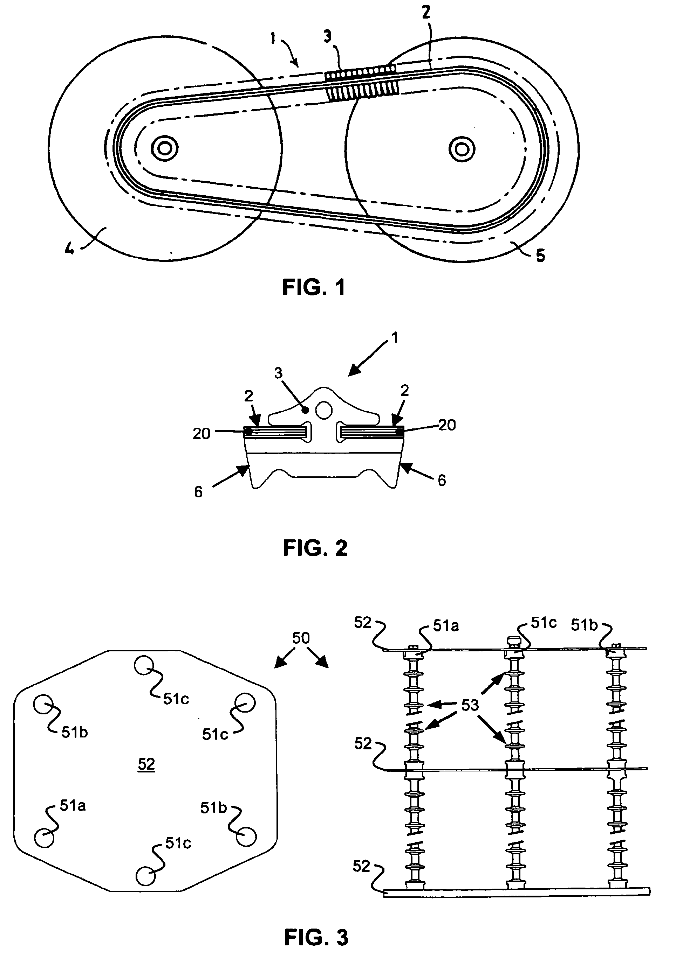

Figure 1 shows schematically a continuous variable transmission (CVT) with a pushbelt 1 wrapped around two pulleys 4 and 5, which belt 1 is made up of two laminated sets 2 of radially nested metal rings 20 and an essentially continuous array of transverse elements 3, which are mounted along the circumference of the two sets 2 of rings 20 and which may freely slide there along. Such a continuous variable transmission is known per se.

Figure 2 is a cross-sectional view of the pushbelt 1 providing a front view of a transverse element 3 and a cross section of the two sets 2 of radially nested metal rings 20. The transverse element 3 has two essentially laterally oriented side faces 6 by which it rests against the conical face of the discs of the pulleys 4, 5, as well as two essentially radially oriented bearing faces 7 supporting the sets 2 of rings 20. These rings 20 are typically produced from high quality steel, e.g. maraging steel. A typical thickness of the ring component 20 ranges from 0.15 to 0.20 mm, a typical width thereof ranges from 8 to 35 mm and a typical circumference length thereof ranges from 500 to 1000 mm, i.e. when allowed to assume a circular posture typically has a so-called free-state ring diameter of between 160 to 320 mm.

In the manufacturing process of the pushbelt 3, the ring 20 is subjected to several heat treatments, including a nitriding process wherein Nitrogen atoms are embedded in the surface material of the ring 20 to increase the hardness and wear resistance thereof. In such process it is to be preferred that the entire surface of the ring 20 is exposed to the surrounding atmosphere and that the ring 20 is placed in a circular posture. However, in practice these preconditions can not all be realised to perfection, since the ring 20 must also be reliably held and conveyed efficiently and reliably, which implies that the ring 20 is to be placed and possibly clamped in a carrier rack of some sort.

The present invention provides for a carrier rack design that presents a favourable optimum between the above-mentioned process requirements. An example of such a carrier rack 50 is shown both in a side elevation and in a top view in figure 3 and comprises six parallel rods 51 that are provided in three diametrically opposed pairs 51 a, 51 b and 51 c, whereby all rods 51 extend in vertical direction and are interconnected by means of predominantly horizontally oriented spacers 52. Each rod comprises a number of horizontally projecting, circular ring seats 53 that are positioned at corresponding intervals along the height of the rods 51.

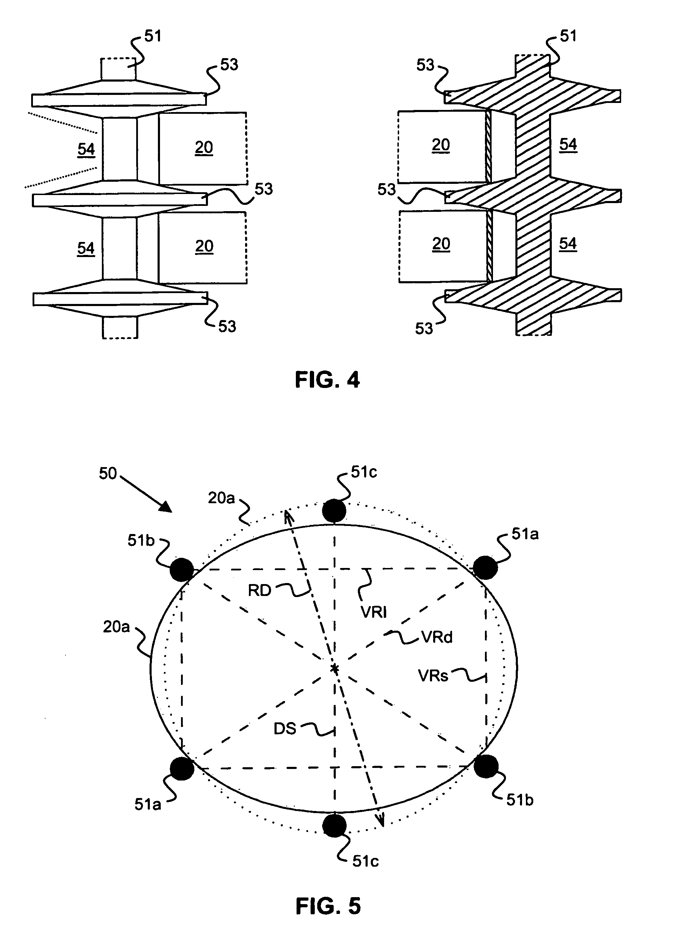

In figure 4 the ring seat 53 is shown in more detail both in a side elevation and in a cross-section, whereby in each case also a ring 20 mounted in the ring seat 53 is depicted. Each ring seat 53 defines a tapered, i.e. at least effectively V-shaped recess 54 that wideness in (radially) outward direction as indicated by the two diverging dotted lines in figure 4. It may be evident that by such shape of the ring seat 53, on the one hand, a contact between the ring 20 and the respective rod 51 is favourably avoided and, on the other hand, a contact area between the ring 20 and the ring seat 53 is as small as possible, i.e. is favourably limited to point contacts on an edge of the ring 20.

In figure 5 a schematically drawn top view of the carrier rack 50 similar to that of figure 3, wherein the mutual placement of the rods 51 thereof is indicated, relative to a diameter Dr of the ring 20 in its free-state, which latter is illustrated by the dotted line 20a. Further, the continuous line 20b indicates how the ring 20 sits in the rack 50 once mounted in between the rods 51 (51 a, 51 b and 51 c) thereof. From figure 5 it appears that four of the total of six rods 51, i.e. the diametrically opposed rod pairs 51 a and 51 b, are placed on the corners of a virtual rectangle having long sides VRI and short sides VRs. Hereby, the ratio between the long side VRI and the short side VRs of the virtual rectangle amounts to about 1.5 and the diagonals VRd thereof are essentially equal to the free-state ring diameter RD. The remaining two of the total of six rods 51, i.e. the diametrically opposed pair 51c, are positioned outside such virtual rectangle essentially halfway the long sides VRI thereof such that a mutual distance DS of about 0.9 times the free-state ring diameter RD is defined there between.

## Claims

1. Carrier rack (50) for carrying a metal ring component (20) of a pushbelt (3) in a heat treatment process step comprising at least three parallel rods (51) that extent in vertical direction, **characterised in that** the rack (50) comprises an even number of rods (51) that are arranged in pairs of diametrically opposed rods (51; 51 a, 51 b, 51 c), which rods (51) are interconnected by means of at least one spacer (52) and are each provided with a number of horizontally projecting ring seats (53) that define a tapered, i.e. at least effectively V-shaped recess (54) that wideness in radially outward direction relative to the long axis of the respective rod (51), and **in that** for at least one of said pairs of rods (51; 51 a, 51 b, 51 c) a distance between the respective rods (51c) thereof is less than a diameter (RD) of the ring component (20) when positioned in a circular posture and the rods (51) of the remaining pairs of rods (51; 51a, 51b, 51c) are placed just outside or lightly touching the circumference of the ring component (20) when being held between the said one pair of rods (51c).

2. Carrier rack (50) according to claim 1, **characterised in that** the ring seats (53) are shaped as solids of revolution relative to the long axis of the respective rod (51).

3. Carrier rack (50) according to claim 1 or 2, **characterised in that**, on the respective rod (51), the ring seats (53) are provided at mutually corresponding intervals.

4. Carrier rack (50) according to claim 1, **characterised in that** such distance amounts to 80-95% of such ring diameter (RD), preferably is equal to 90% thereof.

5. Carrier rack (50) according to any one of the preceding claims, **characterised in that**, the rack (50) comprises at least four rods (51; 51a, 51 b) provided as two pairs of diametrically opposed rods (51; 51 a, 51 b), which four rods (51; 51a, 51 b) are placed on the corners of a virtual rectangle having two long sides (VRI) and two short sides (VRs), such that a ratio of about 1.5 is defined between the respective lengths thereof.

6. Carrier rack (50) according to claim 5, **characterised in that**, the rack (50) comprises one further pair of diametrically opposed rods (51; 51c), each rod (51; 51c) thereof being placed outside the virtual rectangle essentially halfway a respective one of the two long sides (VRI) thereof.

7. Carrier rack (50) according to claim 6, **characterised in that**, a distance between the rods (51; 51c) of the said one further pair of rods (51; 51c) is smaller than a diameter (RD) of the ring component (20), when positioned in a circular posture, and a distance between the rods (51; 51a, 51 b) of each of the said two pairs of rods (51; 51 a, 51 b), which corresponds to the diagonals (VRd) of the virtual rectangle, is equal to or slightly larger than the such diameter (RD).

## Patentansprüche

1. Trägergestell (50) zum Tragen einer Metallringkomponente (20) eines Schubriemens (3) in einem Wärmebehandlungsverfahrensschritt mit mindestens drei parallelen Stäben (51), die sich in vertikaler Richtung erstrecken, **dadurch gekennzeichnet, dass** das Gestell (50) eine gerade Anzahl von Stäben (51) umfasst, die in Paaren sich diametral gegenüberliegender Stäbe (51; 51a, 51b, 51c) angeordnet sind, wobei die Stäbe (51) über mindestens einen Abstandhalter (52) miteinander verbunden und jeweils mit mehreren horizontal vorstehenden Ringsitzen (53) versehen sind, die eine konisch zulaufende, d. h. mindestens effektiv V-förmige Aussparung (54) definieren, die sich in radial nach außen gehender Richtung bezüglich der langen Achse des jeweiligen Stabs (51) verbreitert, und dass für mindestens eines der Paare Stäbe (51; 51a, 51b, 51c) ein Abstand zwischen den jeweiligen Stäben (51c) davon kleiner als ein Durchmesser (RD) der Ringkomponente (20) ist, wenn sie in einer kreisförmigen Position positioniert ist, und die Stäbe (51) der restlichen Paare Stäbe (51; 51a, 51b, 51c) knapp außerhalb des Umfangs der Ringkomponente (20) platziert sind oder diesen leicht berühren, wenn sie zwischen dem einen Paar Stäbe (51c) gehalten ist.

2. Trägergestell (50) nach Anspruch 1, **dadurch gekennzeichnet, dass** die Ringsitze (53) als Rotationskörper bezüglich der langen Achse des jeweiligen Stabs (51) geformt sind.

3. Trägergestell (50) nach Anspruch 1 oder 2, **dadurch gekennzeichnet, dass** die Ringsitze (53) an dem jeweiligen Stab (51) in sich gegenseitig entsprechenden Intervallen vorgesehen sind.

4. Trägergestell (50) nach Anspruch 1, **dadurch gekennzeichnet, dass** dieser Abstand 80 - 95% dieses Ringdurchmessers (RD) beträgt und vorzugsweise gleich 90% davon beträgt.

5. Trägergestell (50) nach einem der vorhergehenden Ansprüche, **dadurch gekennzeichnet, dass** das Gestell (50) mindestens vier Stäbe (51; 51a, 51b) umfasst, die als zwei Paare sich diametral gegenüberliegender Stäbe (51; 51a, 51b) vorgesehen sind, wobei die vier Stäbe (51; 51a, 51b) an den Ecken eines gedachten Rechtecks mit zwei langen Seiten (VRl) und zwei kurzen Seiten (VRs) platziert sind, so dass zwischen den jeweiligen Längen davon ein Verhältnis von ungefähr 1,5 definiert ist.

6. Trägergestell (50) nach Anspruch 5, **dadurch gekennzeichnet, dass** das Gestell (50) ein weiteres Paar sich diametral gegenüberliegender Stäbe (51; 51c) umfasst, wobei jeder Stab (51; 51c) davon außerhalb des gedachten Rechtecks, im Wesentlichen auf halber Höhe einer jeweiligen der beiden langen Seiten (VRl) davon platziert ist.

7. Trägergestell (50) nach Anspruch 6, **dadurch gekennzeichnet, dass** ein Abstand zwischen den Stäben (51; 51c) des einen weiteren Paars Stäbe (51; 51c) kleiner als ein Durchmesser (RD) der Ringkomponente (20) ist, wenn sie in einer kreisförmigen Position positioniert ist, und ein Abstand zwischen den Stäben (51; 51a, 51b) jedes der beiden Paare Stäbe (51; 51a, 51b), der den Diagonalen (VRd) des gedachten Rechtecks entspricht, gleich diesem Durchmesser (RD) oder etwas größer als dieser ist.

## Revendications

1. Support (50) destiné à supporter un composant annulaire métallique (20) d'une courroie de poussée (3) dans une étape de processus de traitement thermique comprenant au moins trois tiges parallèles (51) qui s'étendent dans la direction verticale, **caractérisé en ce que** le support (50) comprend un nombre pair de tiges (51) qui sont agencées par paires de tiges diamétralement opposées (51 ; 51a, 51b, 51c), lesquelles tiges (51) sont reliées entre elles au moyen d'au moins un dispositif d'espacement (52) et sont chacune pourvues d'un certain nombre de sièges annulaires faisant saillie horizontalement (53) qui définissent un retrait effilé (54), c'est-à-dire au moins effectivement en forme de V, qui s'élargit dans la direction radialement vers l'extérieur par rapport au grand axe de la tige respective (51), et **en ce que** pour au moins l'une desdites paires de tiges (51 ; 51a, 51b, 51c), une distance entre les tiges respectives (51c) de ladite paire est inférieure à un diamètre (RD) du composant annulaire (20) lorsqu'il est positionné dans une position circulaire et que les tiges (51) des paires restantes de tiges (51 ; 51a, 51b, 51c) sont placées juste à l'extérieur ou légèrement en contact avec la circonférence du composant annulaire (20) lorsqu'il est retenu entre ladite une paire de tiges (51c).

2. Support (50) selon la revendication 1, **caractérisé en ce que** les sièges annulaires (53) sont formés en tant que solides de révolution par rapport au grand axe de la tige respective (51).

3. Support (50) selon la revendication 1 ou 2, **caractérisé en ce que**, sur la tige respective (51), les sièges annulaires (53) sont prévus à des intervalles se correspondant mutuellement.

4. Support (50) selon la revendication 1, **caractérisé en ce qu'**une telle distance correspond à 80-95 % d'un tel diamètre annulaire (RD), de préférence est égale à 90 % de celui-ci.

5. Support (50) selon l'une quelconque des revendications précédentes, **caractérisé en ce que** ledit support (50) comprend au moins quatre tiges (51 ; 51a, 51b) prévues sous forme de deux paires de tiges diamétralement opposées (51 ; 51a, 51b), lesquelles quatre tiges (51 ; 51a, 51b) sont placées au coin d'un rectangle virtuel ayant deux côtés longs (VRl) et deux côtés courts (VRs), de telle sorte qu'un rapport d'environ 1,5 soit défini entre les longueurs respectives de ceux-ci.

6. Support (50) selon la revendication 5, **caractérisé en ce que** ledit support (50) comprend une paire supplémentaire de tiges diamétralement opposées (51 ; 51c), chaque tige (51 ; 51c) de ladite paire étant placée à l'extérieur du rectangle virtuel essentiellement au milieu de l'un respectif des deux côtés longs (VR1) de celui-ci.

7. Support (50) selon la revendication 6, **caractérisé en ce qu'**une distance entre les tiges (51 ; 51c) de ladite une paire supplémentaire de tiges (51 ; 51c) est inférieure à un diamètre (RD) du composant annulaire (20), lorsqu'il est positionné dans une position circulaire, et une distance entre les tiges (51 ; 51a, 51b) de chacune desdites deux paires de tiges (51 ; 51a, 51b) qui correspond aux diagonales (VRd) du rectangle virtuel est égale ou légèrement supérieure audit diamètre (RD).
